# EUROPÄISCHE PATENTSCHRIFT

(11) **EP 2 837 556 B1**
(45) Veröffentlichungstag und Bekanntmachung des Hinweises auf die Patenterteilung: **27.04.2016**
(21) Anmeldenummer: 13004003.3
(22) Anmeldetag: 12.08.2013
(51) Int. Cl.: B64C 13/12, F16D 11/04

(54) **Pneumatisch aktivierte Entkoppelungsvorrichtung**
Pneumatically activated decoupling device
Dispositif de découplage à activation pneumatique

(43) Veröffentlichungstag der Anmeldung: 18.02.2015
(73) Patentinhaber: Airbus Defence and Space GmbH, 85521 Ottobrunn (DE)
(72) Erfinder: Naubert, Alexander, D-81927 München (DE); Christmann, Markus, D-81375 München (DE)
(74) Vertreter: Kopf Westenberger Wachenhausen Patentanwälte PartG mbB

(56) Entgegenhaltungen:
- US-A- 3 902 379
- US-A1- 2011 146 434
- US-A1- 2012 018 275

## Beschreibung

Die vorliegende Erfindung betrifft Luftfahrzeugtechnologie. Insbesondere betrifft die vorliegende Erfindung Aktuatortechnologie für aerodynamisch wirksame Elemente eines Luftfahrzeuges. Weiter insbesondere betrifft die vorliegende Erfindung eine pneumatische Entkoppelungsvorrichtung, ein Aktuatorelement, eine Aktuatoranordnung sowie ein Luftfahrzeug, insbesondere Flugzeug oder Helikopter.

Aktuatoren finden in Luftfahrzeugen Verwendung, um Elemente der Luftfahrzeuge mechanisch zu bewegen und in ihrer Position bzw. Lage zu verändern. Bei Flugzeugen sind dies beispielsweise Ruderflächen oder Elemente der Tragflächen, um das Auftriebsverhalten der Flugzeuge zu beeinflussen. Bei Helikoptern kann dies beispielsweise die unterschiedliche Rotorblattanstellung durch eine Taumelscheibe beeinflussen.

Herkömmlich werden derartige Aktuatoren als Hydraulikelemente ausgeführt, da diese Technologie seit langem beherrschbar und wenig fehleranfällig ist. Im Fehlerfall können herkömmliche Hydraulikaktuatoren meist noch bewegt werden, in anderen Worten, blockieren im Fehlerfall nicht.

Durch die zunehmende Elektrifizierung von Luftfahrzeugen ist es gewünscht, hydraulische Aktuatoren, welche möglicherweise ein im gesamten Luftfahrzeug verlaufendes Hydrauliksystem benötigen, durch elektrische Aktuatoren zu ersetzen. Diese können rein elektrisch versorgt werden, wobei derartige elektrische Verbindungen regelmäßig einfacher in einem Luftfahrzeug zu verlegen sind als beispielsweise Hydraulikleitungen. Eine Bewegungserzeugung eines solchen elektrischen Aktuators kann nun ebenfalls rein elektrisch, zum Beispiel mit Hilfe eines geeigneten Antriebes durch einen Elektromotor, realisiert werden oder aber es kann ein lokales Hydrauliksystem am Aktuator vorgesehen sein, insbesondere ein im Aktuatorsystem angeordnetes Hydrauliksystem, welches gleichfalls nur extern mit elektrischer Energie versorgt werden muss.

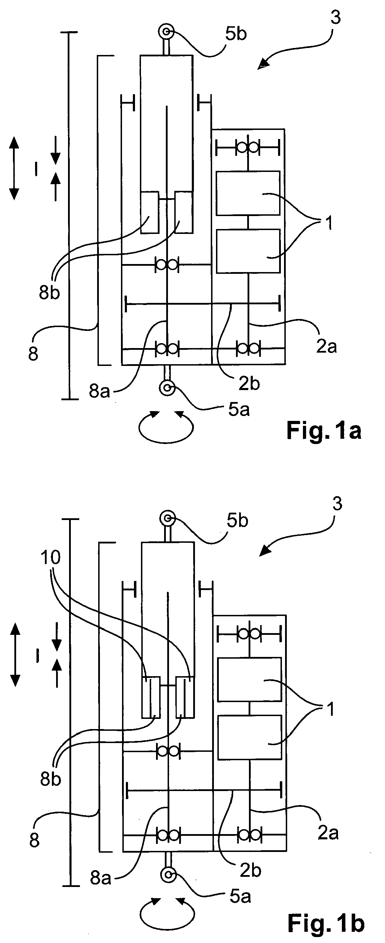

Figur 1 a zeigt eine schematische Darstellung eines elektromechanischen Aktuators.

Exemplarisch zwei Motorelemente 1 sind unter Verwendung einer geeigneten Anbindung, bestehend aus Motorwelle 2a und einer geeigneten Übertragung 2b an der Antriebseinheit 8 des Aktuatorelementes 3 angebunden. Die Antriebseinheit 8 ist in ihrer Länge I veränderbar, insbesondere in ihrem Abstand zwischen den beiden Anbindungspunkten 5a,b, so dass eine Längenänderung der Antriebseinheit 8 des Aktuatorelementes 3 den Abstand zwischen den Anbindungspunkten 5a,b verändert. Durch eine geeignete Einspannung zwischen Elementen ist somit beispielsweise ein Bewegen oder Verkippen einer aerodynamischen wirksamen Struktur möglich. Die Antriebseinheit 8 besteht aus einem ersten Antriebselement 8a und einem zweiten Antriebselement 8b, beispielsweise aufgebaut als ein Kugelgewindetrieb 8 mit Spindelmutter 8b und Antriebsspindel 8a. Durch eine Rotation der Antriebsspindel 8a ist die Spindelmutter 8b auf dieser verschiebbar, so dass die Rotation der Antriebsspindel 8a eine Längenänderung der Antriebseinheit 8 und damit des Aktuatorelementes 3 bzw. eine Veränderung des Abstandes zwischen den Anbindungspunkten 5a,b bereitstellt. Im Falle eines Defektes eines Aktuatorelementes, insbesondere bei missionskritischen aerodynamisch wirksamen Flächen, muss sichergestellt sein, dass diese trotz des Defektes zumindest weiterhin bewegt werden können. Im Falle, dass ein Aktuatorelement ausfällt, wird meist, je nach konkretem Einsatz, eine gewisse Redundanz vorgesehen. Im Falle von Leitwerken oder Rudern kann beispielsweise ein zweites Aktuatorelement kraftparallel zum ersten angeordnet sein, so dass die Lageänderung der aerodynamisch wirksamen Fläche von einem der beiden oder auch von beiden Aktuatorelementen zusammen wahrgenommen werden kann.

Fällt nun ein Aktuatorelement der zwei parallelen Aktuatorelemente aus, so kann das andere die Funktion zumindest aufrechterhalten. Besonders relevant in diesem Zusammenhang sind jedoch Defekte von Aktuatorelementen, die es nachfolgend nicht mehr ermöglichen, eine Längenänderung durchzuführen; beispielsweise der Bruch einer Kugel des Kugelgewindes kann möglicherweise die Antriebsspindel und die Spindelmutter gegeneinander blockieren, so dass eine Längenänderung des Aktuatorelementes nicht mehr möglich ist. In solch einem Fall kann eine Steuerung der aerodynamisch wirksamen Fläche auch nicht durch das parallel angeordnete Aktuatorelement durchgeführt werden. Schlimmstenfalls wäre das Flugzeug dadurch nicht mehr steuerbar und würde möglicherweise abstürzen. Um elektromechanische Aktuatorelemente weiterhin, auch im Fehlerfall, in ihrer Länge veränderbar zu halten, können Entkoppelungsvorrichtungen (wie z.B. aus Dokument US2011/0146434 bekannt) bzw. Entkoppelungsmechanismen in die Aktuatorelemente integriert werden, welche in einem Fehlerfall eine solche Entkoppelung ermöglichen, um weiterhin, zumindest durch eine Kraftzufuhr von außen, beispielsweise durch ein kraftparallel angeordnetes Aktuatorelement, eine geeignete Kraft aufbringen zu können, um die aerodynamisch wirksame Fläche betriebsfähig zu halten, während gleichzeitig das defekte Aktuatorelement durch die Kraft von außen in seiner Länge verändert wird und somit die Bewegung der aerodynamisch wirksamen Fläche nicht blockiert.

Figur 1b zeigt eine exemplarische Ausgestaltung eines derartigen Aktuatorelementes. Letztendlich unterscheidet sich die Ausgestaltung der Figur 1b zu der Figur 1 a nur durch das Vorsehen einer Entkoppelungsvorrichtung 10. Entkoppelungsvorrichtung 10 entkoppelt dabei nicht lediglich die beiden Antriebselemente 8a,b voneinander, vielmehr wird eine Entkoppelung dergestalt vorgenommen, so dass eine Entkoppelung der Angriffspunkte 5a,b erfolgt, wobei einer der Angriffspunkte auch im entkoppelten Zustand im Wesentlichen mit beiden Antriebselementen der Antriebseinheit verbunden ist, während die Verbindung eines Antriebselementes zum zweiten Angriffspunkt 5b gelöst wird. Hierdurch kann sich die Länge eines Aktuatorelementes unabhängig davon verändern, ob ein Mechanismus der Antriebseinheit, beispielsweise das erste Antriebselement 8a zum zweiten Antriebselement 8b, blockiert ist.

Ein Aspekt der vorliegenden Erfindung kann darin gesehen werden, eine besondere Ausgestaltung einer Entkoppelungsvorrichtung für ein Aktuatorelement bereitzustellen.

Demgemäß wird eine Entkoppelungsvorrichtung, ein Aktuatorelement, eine Aktuatoranordnung sowie ein Luftfahrzeug, insbesondere Flugzeug oder Helikopter gemäß den unabhängigen Ansprüchen angezeigt. Bevorzugte Ausgestaltungen ergeben sich aus den abhängigen Ansprüchen.

Gemäß einer ersten Ausgestaltung der vorliegenden Erfindung wird eine pneumatische Entkoppelungsvorrichtung für ein elektromechanisches Aktuatorelement bereitgestellt, aufweisend zumindest ein Druckspeicherelement mit zumindest einer Ableitung und zumindest einem Auslösemechanismus, eingerichtet den im Druckspeicherelement gespeicherten Druck gesteuert freizugeben. Die Ableitung des Druckspeicherelementes ist an ein elektromechanisches Aktuatorelement ankoppelbar, wobei durch Auslösen des Auslösemechanismus der im Druckspeicherelement gespeicherte Druck an das mechanische Aktuatorelement abgebbar ist zum Auslösen einer Entkoppelungsfunktion im elektromechanischen Aktuatorelement.

Gemäß einer weiteren Ausgestaltung der vorliegenden Erfindung wird ein Aktuatorelement angezeigt, aufweisend eine Antriebseinheit mit einem ersten Antriebselement und einem zweiten Antriebselement, wobei das erste Antriebselement und das zweite Antriebselement derart funktional zusammenwirken, um eine Längenveränderung des Aktuatorelementes zu bewirken. Das Aktuatorelement weist weiterhin einen Entkoppelungsmechanismus auf, welcher das Aktuatorelement funktional entkoppelt, so dass die Längenveränderung des Aktuatorelementes unabhängig von der Antriebseinheit ermöglicht wird, insbesondere ohne funktionale Entkoppelung von erstem Antriebselement und zweitem Antriebselement. Das Aktuatorelement weist weiterhin eine Entkoppelungsvorrichtung gemäß der vorliegenden Erfindung auf, funktional gekoppelt mit dem Entkoppelungsmechanismus und eingerichtet, den gespeicherten Druck an den Entkoppelungsmechanismus bereitzustellen, wobei der Entkoppelungsmechanismus bei bereitgestelltem Druck das Aktuatorelement funktional entkoppelt.

Gemäß einer weiteren Ausgestaltung der vorliegenden Erfindung wird eine Aktuatoranordnung angezeigt, aufweisend zumindest zwei Aktuatorelemente gemäß der vorliegenden Erfindung, wobei die zumindest zwei Aktuatorelemente kraftparallel angeordnet sind, so dass eine Längenveränderung der Aktuatoranordnung von einem Aktuatorelement allein oder von beiden Aktuatorelementen parallel bewirkbar ist und wobei eine Entkoppelungsvorrichtung gemäß der vorliegenden Erfindung an die Aktuatorelemente angebunden ist.

Gemäß einer weiteren Ausgestaltung der vorliegenden Erfindung wird ein Luftfahrzeug, insbesondere Flugzeug oder Helikopter mit einer Aktuatoranordnung gemäß der vorliegenden Erfindung und/oder einem Aktuatorelement gemäß der vorliegenden Erfindung angezeigt.

Ein Aspekt der vorliegenden Erfindung ist das Vorsehen einer Entkoppelungsvorrichtung für ein elektromechanisches Aktuatorelement, welche basierend auf einem pneumatischen Prinzip arbeitet. In anderen Worten weist die erfindungsgemäße Entkoppelungsvorrichtung ein Druckspeicherelement auf, in dessen Inneren z.B. ein Gas mit Überdruck gespeichert und somit eingerichtet ist, durch Expansion des Gases, beispielsweise im gerichteten Abfluss unter Verwendung einer Ableitung, diesen Druck an weitere Elemente abzugeben. Wenn im Kontext der vorliegenden Erfindung eine Druckabgabe bzw. ein gespeicherter Druck thematisiert wird, ist darunter die Kraftabgabe des komprimierten Gases aufgrund dessen Überdrucks zu verstehen.

Der gespeicherte Druck in der Entkoppelungsvorrichtung wird dabei an einen elektromechanischen Aktuator abgegeben, der eingerichtet ist, aufgrund des erhaltenen Drucks eine Entkoppelung seiner Antriebselemente durchzuführen, insbesondere eine Entkoppelung der Anbindungspunkte des Aktuatorelementes, deren Abstand letztendlich die effektive Länge des Aktuatorelementes zur Einstellung aerodynamisch wirksamer Flächen in einem Luftfahrzeug darstellen. Letztendlich ist die erfindungsgemäße Entkoppelungsvorrichtung jedoch losgelöst von einer konkreten Implementierung eines Aktuatorelementes, solange das Aktuatorelement eingerichtet ist, aufgrund des erhaltenen Drucks die Entkoppelung durchzuführen. Auch die konkrete Ausgestaltung der Entkoppelungsvorrichtung ist dabei im Wesentlichen nur dadurch definiert, dass sie ein geeignetes Druckspeicherelement vorsieht, welches wiederum durch einen geeigneten Auslösemechanismus in einem Fehlerfall bzw. Entkoppelungsfall des elektromechanischen Aktuators den gespeicherten Druck gesteuert freigeben kann. Die Wirkung und damit die Entkoppelung im Aktuatorelement aufgrund des gespeicherten Druckes ist nachfolgend eine durch das Aktuatorelement selbst darzustellende Funktionalität. Gemäß einer bevorzugten Ausgestaltung der vorliegenden Erfindung mag eine Druckbestimmungsvorrichtung zum Bestimmen des Druckes im Druckspeicherelement vorgesehen sein. Die Druckbestimmungsvorrichtung mag dabei ausgebildet sein als eine Vorrichtung aus der Gruppe, bestehend aus visueller Druckbestimmungsvorrichtung, mechanischer Druckbestimmungsvorrichtung, elektronischer Druckbestimmungsvorrichtung und/oder im Druckspeicherelement angeordneter Drucksensor.

Zur Überprüfung der einwandfreien Funktion der pneumatischen Entkoppelungsvorrichtung ist dabei im Wesentlichen relevant bestimmen zu können, dass der im Druckspeicherelement gespeicherte bzw. vorhandene Druck zur Auslösung eines Aktuatorelementes ausreicht. Somit ist das Vorsehen einer Druckbestimmungsvorrichtung zum Bestimmen des Druckes im Druckspeicherelement bevorzugt. Eine solche Druckbestimmungsvorrichtung kann beispielsweise ausgebildet sein als eine visuelle Druckbestimmungsvorrichtung, beispielsweise ein Federelement in der Wandung des Druckspeicherelementes, das aufgrund des im Druckspeicherelement vorherrschenden Drucks nach außen gepresst wird und über einen visuellen Indikator verfügt. Auch kann eine mechanische Druckbestimmungsvorrichtung vorgesehen werden, bei welcher z.B. das zuvor beschriebene Federelement manuell, beispielsweise von einem Servicetechniker, am Einsatzort in das Druckspeicherelement eingebracht, verschoben bzw. gepresst wird und welches wiederum, einen ausreichenden Druck im Druckspeicherelement vorausgesetzt, durch den Überdruck nach außen bewegt wird. Auch ist das Vorsehen einer elektronischen Druckbestimmungsvorrichtung wie beispielsweise ein im Druckspeicherelement angeordneter Drucksensor denkbar.

Gemäß einer weiteren bevorzugten Ausgestaltung der vorliegenden Erfindung mag das Druckspeicherelement zumindest zwei Ableitungen aufweisen, wobei an jeder der zumindest zwei Ableitungen ein elektromechanisches Aktuatorelement anschließbar ist und wobei der Auslösemechanismus ausgebildet ist, den gespeicherten Druck unter Verwendung einer der zumindest zwei Ableitungen an ein elektromechanisches Aktuatorelement abzugeben, wobei nach Abgabe des gespeicherten Druckes an ein elektromechanisches Aktuatorelement die Entkoppelungsfunktion des zweiten elektromechanischen Aktuatorelementes durch die Entkoppelungsvorrichtung nicht mehr auslösbar ist.

Wie zuvor beschrieben, werden erfindungsgemäße Aktuatoranordnungen bei flugrelevanten aerodynamisch wirksamen Flächen vorgesehen, so dass im Falle des Defektes eines Aktuatorelementes die Funktion der Einstellung der aerodynamisch wirksamen Fläche weiterhin vom kraftparallel bzw. wirkparallel angeordneten zweiten Aktuatorelement übernommen und dadurch die Funktionsfähigkeit bzw. Flugfähigkeit des Luftfahrzeuges aufrechterhalten werden kann. Sollte ein Fehlerfall jedoch dahingehend auftreten, dass eine Entkoppelungsvorrichtung eines Aktuatorelementes beide Aktuatorelemente einer Aktuatoranordnung (gleichzeitig) entkoppelt, so würde dies ebenfalls den Verlust der Steuerfähigkeit der aerodynamisch wirksamen Fläche und damit möglicherweise des gesamten Luftfahrzeuges bedeuten.

Aus diesem Grund wird bevorzugt eine Entkoppelungsvorrichtung vorgesehen, welche beispielsweise zwei kraftparallel angeordnete Aktuatorelemente gemeinsam mit einer Entkoppelungsfunktionalität versorgt, wobei die Entkoppelungsvorrichtung eingerichtet ist, ausschließlich einem der beiden Aktuatorelemente eine Funktionalität bereitzustellen, welche zur Entkoppelung des Aktuatorelementes bzw. zum Auslösen des Entkoppelungsmechanismus des entsprechenden Aktuatorelementes verwendbar ist. Konkret bezogen auf den Fall einer pneumatischen Entkoppelungsvorrichtung mit einem Druckspeicherelement kann somit ein Druckspeicherelement an die Entkoppelungsmechanismen von zwei kraftparallel angeordneten Aktuatorelementen angebunden werden, wobei im Druckspeicherelement ausschließlich derart viel Druck gespeichert ist, um eines der beiden Aktuatorelemente zu entkoppeln. In anderen Worten, wenn das Druckspeicherelement Druck an ein Aktuatorelement zur Entkoppelung abgegeben hat, kann das Druckspeicherelement nicht mehr genug Druck aufweisen, um auch das zweite, kraftparallel angeordnete Aktuatorelement zu entkoppeln. Hierdurch lässt sich die Sicherheit im Betrieb signifikant erhöhen, da nicht fälschlicherweise beide Aktuatorelemente entkoppelt werden können. In einer weiteren möglichen Ausgestaltung wird eine geeignete Auslassöffnung im Entkoppelungsmechanismus durch Betätigen des Entkoppelungsmechanismus geöffnet, so dass der im Druckspeicherelement verbliebene Druck nach Ausübung der Entkopplungsfunktion durch die Auslassöffnung im Entkoppellungsmechanismus entweichen kann. Hierdurch lässt sich die Sicherheit erhöhen, da nicht fälschlicherweise das zweite Aktuatorelement auch noch entkoppelt werden kann.

Gemäß einer weiteren bevorzugten Ausgestaltung der vorliegenden Erfindung mag der Auslösemechanismus ausgebildet sein als ein einzelner Auslösemechanismus, eingerichtet, den Druck wahlweise mittels jeder der zumindest zwei Ableitungen freizugeben, oder der Auslösemechanismus mag ausgebildet sein als ein mehrfacher Auslösemechanismus, wobei jeder der Ableitungen ein Auslösemechanismus des mehrfachen Auslösemechanismus zugeordnet ist. In anderen Worten weist ein mehrfacher Auslösemechanismus parallel bzw. redundant ausgebildete Auslösemechanismen auf.

Dadurch mag insbesondere sichergestellt sein, dass bei zwei kraftparallel angeordneten Aktuatorelementen nur ein Aktuatorelement entkoppelbar ist. Im Falle eines einzelnen Auslösemechanismus kann dieser somit derart ausgebildet sein, dass er entweder eine oder die andere Ableitung des Druckspeicherelementes auslöst bzw. öffnet und somit den gespeicherten Druck an den Entkoppelungsmechanismus eines Aktuatorelementes abgibt. Im Falle eines mehrfachen Auslösemechanismus kann jeder Auslösemechanismus getrennt steuerbar sein. Im Falle, dass ein Auslösemechanismus bereits ausgelöst wurde, kann der andere somit elektronisch oder durch andere geeignete Maßnahmen funktionsunfähig gestellt werden. Durch beide Maßnahmen mag sichergestellt werden, dass nur einer von zwei kraftparallel angeordneten Aktuatorelementen einer Aktuatoranordnung entkoppelbar ist, insbesondere keine gleichzeitige Entkoppelung von beiden kraftparallel angeordneten Aktuatorelementen.

Gemäß einer weiteren bevorzugten Ausgestaltung der vorliegenden Erfindung mag der Auslösemechanismus ein Formschlusselement mit einem ersten Kraftelement, ein zweites Kraftelement und ein Antriebselement aufweisen, wobei das erste Kraftelement eingerichtet ist, einen Formschluss des Formschlusselementes zu halten, wobei das Antriebselement eingerichtet ist, entgegen der Kraftwirkung des ersten Kraftelementes den Formschluss zu lösen und wobei das zweite Kraftelement eingerichtet ist, bei gelöstem Formschluss den in dem Druckspeicherelement gespeicherten Druck mittels der Ableitung freizugeben. Insbesondere mag dabei die Kraftrichtung des ersten Kraftelementes und des zweiten Kraftelementes nicht parallel bzw. im Wesentlichen senkrecht zueinander orientiert sein.

Eine solche Ausgestaltung bzw. Anordnung bietet den Vorteil, dass der Formschluss des Formschlusselementes im Wesentlichen kraftneutral gehalten werden kann und insbesondere nicht gegen die Kraftrichtung des zweiten Kraftelementes zu halten ist. Hierdurch mag insbesondere sichergestellt sein, dass bei geschlossenem Formschluss keine Gegenkraft zu erzeugen ist, welche im Fehlerfall, im Falle, dass diese Kraft ausfällt, in einer im Wesentlichen automatischen und ungewollten Auslösung der Druckabgabe aus dem Druckspeicherelement resultiert. Außerdem können die Kräfte des ersten und zweiten Kraftelementes signifikant unterschiedlich sein. Das erste Kraftelement mag lediglich den Formschluss halten, während das zweite Kraftelement eine Kraft aufbringen mag, um den im Druckspeicherelement gespeicherten Druck freizugeben. Auch kann beispielsweise die Kraft des Antriebselementes zum Lösen des Formschlusses vergleichsweise gering ausfallen und insbesondere unabhängig sein von der Kraftwirkung des zweiten Kraftelementes zum Auslösen bzw. zur Abgabe des gespeicherten Druckes. Während beispielsweise das erste Kraftelement ein vergleichbar kleines Federkraftelement sein kann, um das Formschlusselement in einer Vertiefung zu halten, kann das zweite Kraftelement ein vergleichsweise starkes Federkraftelement zum Auslösen des Auslösemechanismus sein.

Gemäß einer weiteren bevorzugten Ausgestaltung der vorliegenden Erfindung mag der Druck im Druckspeicherelement gehalten werden durch eine Dichtwirkung eines Dichtelementes, welches in der zumindest einen Ableitung angeordnet ist. Der Auslösemechanismus kann dabei eingerichtet sein, die Dichtwirkung aufzuheben, insbesondere irreversibel aufzuheben, somit beispielsweise das Dichtelement zu zerstören bzw. zu beschädigen, so dass es seine Dichtwirkung nicht mehr in vollem Umfang aufrechterhalten kann. Insbesondere mag das zweite Kraftelement eingerichtet sein, eine Kraft auf das Dichtelement auszuüben, so dass die Dichtwirkung aufgehoben und der im Druckspeicherelement gespeicherte Druck mittels der Ableitung freigegeben wird.

Ein solches Dichtelement mag beispielsweise das Vorsehen eines Membranelementes sein, z.B. ausgebildet aus einem geeigneten Kunststoff oder Metall, welches durch den Auslösemechanismus, insbesondere unter Verwendung der durch das zweite Kraftelement bereitgestellten Kraft durchbrochen wird. Der Auslösemechanismus kann somit das Dichtelement zumindest teilweise zerstören, so dass eine Druckverbindung zwischen Ableitung und Druckspeicherelement hergestellt wird, wodurch der im Druckspeicherelement gespeicherte Druck unter Verwendung der Ableitung an ein Aktuatorelement abgebbar ist.

Gemäß einer weiteren bevorzugten Ausgestaltung mag das Aktuatorelement zwei Anbindungspunkte aufweisen, deren Abstand durch die Längenänderung des Aktuatorelementes festlegbar ist. Eines der Antriebselemente mag dabei im Wesentlichen wirkunmittelbar mit einem der Anbindungspunkte verbunden sein, wobei der Entkoppelungsmechanismus im Wesentlichen wirkunmittelbar mit dem weiteren der Anbindungspunkte verbunden ist und wobei der Abstand der zwei Anbindungspunkte, somit die Wirklänge des Aktuatorelementes, in gekoppeltem Zustand des Entkoppelungsmechanismus durch das Aktuatorelement, insbesondere dessen Antriebseinheit, einstellbar ist und wobei der Abstand der zwei Anbindungspunkte im entkoppelten Zustand der Entkoppelungsvorrichtung durch eine Kraftbeaufschlagung der Anbindungspunkte von außen veränderbar ist.

Somit kennt ein erfindungsgemäßes Aktuatorelement zwei unterschiedliche Betriebsmodi. Ein Betriebsmodus ist dabei einem herkömmlichen, regulären Betrieb gleichzusetzen, in dem das Aktuatorelement eine Antriebseinheit aufweist, die, geeignet angesteuert, eine Längenveränderung des Aktuatorelementes bewirken kann. Aufgrund dieser gesteuerten Längenänderungsmöglichkeit kann das Aktuatorelement verwendet werden, um die Position bzw. Orientierung einer aerodynamisch wirksamen Fläche eines Luftfahrzeuges gezielt zu beeinflussen. Im zweiten Zustand, im entkoppelten Zustand, ist das Aktuatorelement nicht mehr in der Lage, selbst, zumindest in vollem Umfang, seine Längenänderungsfunktion bereitzustellen, beispielsweise durch den Defekt der Antriebseinheit. Im entkoppelten Zustand ist nun sicherzustellen, dass die Längenänderung eines kraftparallel angeordneten Aktuatorelementes nicht durch das defekte Aktuatorelement blockiert bzw. unterbunden wird. Aufgrund des Entkoppelungsmechanismus ist nun die Antriebseinheit derart entkoppelt, so dass eine Längenänderung des entkoppelten Aktuatorelementes durch Zug oder Druck auf die Anbindungspunkte durchführbar ist. Bevorzugt werden dabei nicht lediglich das erste Antriebselement und das zweite Antriebselement entkoppelt, da in einem Fehlerfall, in dem das erste Antriebselement und das zweite Antriebselement gegeneinander blockiert sind, eine solche Entkoppelung möglicherweise nicht durchführbar ist.

Gemäß einer weiteren bevorzugten Ausgestaltung der vorliegenden Erfindung mag die Antriebseinheit ausgebildet sein als ein Kugelgewindetrieb, wobei das erste Antriebselement und das zweite Antriebselement ausgebildet sein mögen als Antriebsspindel und Spindelmutter des Kugelgewindetriebs.

Ein Kugelgewindetrieb mag dabei eine bevorzugte Möglichkeit darstellen, die Längenänderung eines Aktuatorelementes zu bewirken, während eine derart ausgebildete Antriebseinheit ausreichend Stabilität aufweist und eine geeignet große Kraft übertragen mag.

Gemäß einer weiteren bevorzugten Ausgestaltung der vorliegenden Erfindung mag eine Aktuatoranordnung angezeigt sein, wobei die Entkoppelungsvorrichtung im Falle eines Defektes einer Antriebseinheit eines Aktuatorelementes den Entkoppelungsmechanismus dieses Aktuatorelementes auslöst, so dass das Aktuatorelement funktional entkoppelt wird, während die Längenveränderung der Aktuatoranordnung weiterhin vom nicht entkoppelten Aktuatorelement bewirkbar ist.

In anderen Worten sind beispielsweise zwei kraftparallel bzw. wirkparallel angeordnete Aktuatorelemente in der Aktuatoranordnung vorgesehen. Im Falle eines Defektes eines Aktuatorelementes mag dieses unter Verwendung der Entkoppelungsvorrichtung entkoppelbar sein, wobei dieses dann von einer von außen, insbesondere an seinen Anbindungspunkten bereitgestellten Kraft in seiner Länge veränderbar ist. Diese externe Kraft kann beispielsweise vom zweiten wirkparallel bzw. kraftparallel angeordneten Aktuatorelement aufgebracht werden. Dieses mag somit die Position einer aerodynamisch wirksamen Fläche einstellen können und dabei gleichzeitig das entkoppelte Aktuatorelement analog zu seiner eigenen Länge längen bzw. verkürzen.

Nachfolgend wird anhand der beigefügten Zeichnungen näher auf Ausführungsbeispiele der Erfindung eingegangen. Es zeigen:
- **Fig. 1a,b**: eine schematische Darstellung eines elektromechanischen Aktuators gemäß der vorliegenden Erfindung;
- **Fig. 2a-c**: exemplarische Ausgestaltungen von Aktuatorelementen bzw. eine Aktuatoranordnung gemäß der vorliegenden Erfindung;
- **Fig. 3**: eine Detaildarstellung eines Aktuatorelementes gemäß der vorliegenden Erfindung;
- **Fig. 4a,b**: eine exemplarische Ausgestaltung einer Entkoppelungsvorrichtung gemäß der vorliegenden Erfindung; und
- **Fig. 5a,b**: weitere exemplarische Ausgestaltungen von Entkoppelungsvorrichtungen gemäß der vorliegenden Erfindung.

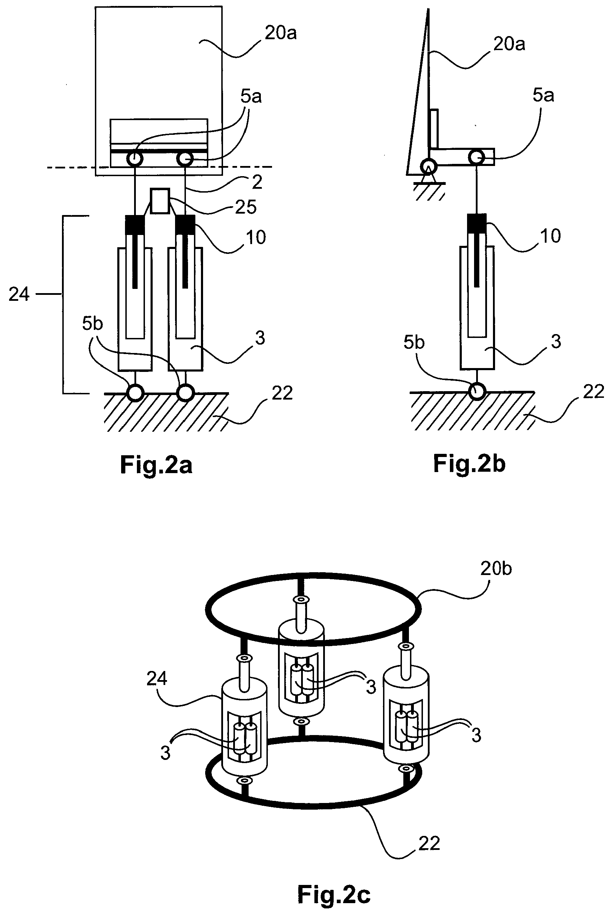

Bezug nehmend auf Figur 2a-c werden exemplarische Ausgestaltungen von Aktuatorelementen bzw. eine Aktuatoranordnung gemäß der vorliegenden Erfindung dargestellt.

Figuren 2a,b zeigen die Verwendung einer erfindungsgemäßen Aktuatoranordnung 24 exemplarisch zur Ansteuerung einer aerodynamisch wirksamen Fläche 20a eines Flugzeuges. Beispielsweise kann es sich hierbei um eine Steuerfläche oder aber um eine den Auftrieb beeinflussende Fläche der Flügel handeln. Die Aktuatoranordnung 24 besteht aus zwei kraftparallel bzw. wirkparallel angeordneten Aktuatorelementen 3, welche einerseits an einem Fixpunkt der Flugzeugstruktur 22 angebracht sind und andererseits mit dem aerodynamisch wirksamen Element 20a in Verbindung stehen. Über einen geeigneten Hebelmechanismus ist durch eine Längung bzw. Kürzung der Aktuatoranordnung 24 eine Winkellage des aerodynamisch wirksamen Elementes 20a einstellbar. Jedes Aktuatorelement 3 weist dabei eine Antriebseinheit mit erstem Antriebselement und zweitem Antriebselement auf, welches in Figuren 2a,b jedoch nicht detailliert dargestellt ist. Jedes Aktuatorelement 3 mit seinen Antriebseinheiten ist für sich einstellbar, eine bestimmte Längenerstreckung anzunehmen, mithin einen Abstand zwischen den Anbindungspunkten 5a und 5b einzustellen. Bezogen auf Figur 2b, wenn der Aktuator 3 gelängt wird, kippt die aerodynamisch wirksame Fläche 20a aufgrund des Hebels nach links, während sie bei einer Verkürzung des Aktuators 3 nach rechts kippt. Wie der Figur 2a zu entnehmen ist, sind die beiden Aktuatorelemente 3 der Aktuatoranordnung 24 parallel zwischen Flugzeugstruktur 22 und aerodynamisch wirksamem Element 20a angebunden. Somit mag jedes Aktuatorelement 3 für sich genommen eine Anwinklung der aerodynamisch wirksamen Fläche 20a erzielen oder aber beide können gemeinsam auf die aerodynamisch wirksame Fläche 20a einwirken.

Im Falle, dass nun eines der Aktuatorelemente 3 derart defekt ist, dass daraus eine Blockade seiner Antriebseinheit resultiert, wäre somit auch das zweite, wirkparallel angeordnete Aktuatorelement 3 blockiert, da das defekte Aktuatorelement dann im Wesentlichen eine starre Anbindung mit unveränderlicher Länge darstellt, so dass eine Neigung des aerodynamisch wirksamen Elementes 20a durch den jeweils anderen, noch funktionsfähigen Aktuator 3 nicht einstellbar wäre. Aus diesem Grund ist Entkoppelungsvorrichtung 25 vorgesehen, welche parallel auf beide Entkoppelungsmechanismen 10 der Aktuatorelemente 3 wirkt. Durch die Entkoppelungsvorrichtung kann der Entkoppelungsmechanismus 10 eines Aktuatorelementes 3 gesteuert aktiviert werden, so dass sich der dann entkoppelte Aktuator im Wesentlichen mit einem geringen Kraftaufwand von außen, insbesondere eingebracht über die Anbindungspunkte 5a,b längen bzw. verkürzen lässt.

Somit kann ein defektes Aktuatorelement 3 mit durch die Entkoppelungsvorrichtung 25 entkoppeltem Entkoppelungsmechanismus 10 krafttechnisch derart deaktiviert werden, so dass die Einstellung des aerodynamisch wirksamen Elementes 20a ausschließlich durch den noch funktionsfähigen Aktuator 3 erfolgen mag. Da nur ein Aktuatorelement 3 gleichzeitig entkoppelt sein darf, mag Entkoppelungsvorrichtung 25 ausgebildet sein, nur einen einzigen Entkoppelungsvorgang anzustoßen, so dass lediglich ein Entkoppelungsmechanismus 10 der Aktuatorelemente 3 entkoppelbar ist.

In Figur 2c ist die Ansteuerung einer Taumelscheibe eines Helikopters dargestellt, welche über drei Aktuatoranordnungen 24 zwischen der Hubschrauberstruktur 22 und dem aerodynamisch wirksamen Element 20b angeordnet ist. Das aerodynamisch wirksame Element 20b, die Taumelscheibe eines Helikopters, ermöglicht dabei die unterschiedliche Anstellung der Rotorblätter, so dass der Helikopter eine der Steuerung entsprechende Bewegungsrichtung einnehmen mag. Die Taumelscheibe 20b soll dabei in drei Freiheitsgraden (Translation in Richtung senkrecht zu der durch 22 beschriebenen Ebene und Rotation um zwei senkrecht zueinander und senkrecht zur Translationsachse stehenden Achsen) verstellbar sein, wodurch diese im Wesentlichen frei durch drei Aktuatoranordnungen 24 angesteuert wird. Jede Aktuatoranordnung 24 weist wiederum zwei Aktuatorelemente 3 auf, welche kraftparallel angeordnet sind. Der interne Aufbau einer Aktuatoranordnung 24 kann dabei entsprechend den Figuren 2a,b ausgebildet sein, indem die Anbindungspunkte der Aktuatoranordnung innerhalb derselben kraftparallel an den Anbindungspunkten der Aktuatorelemente 3 angekoppelt sind.

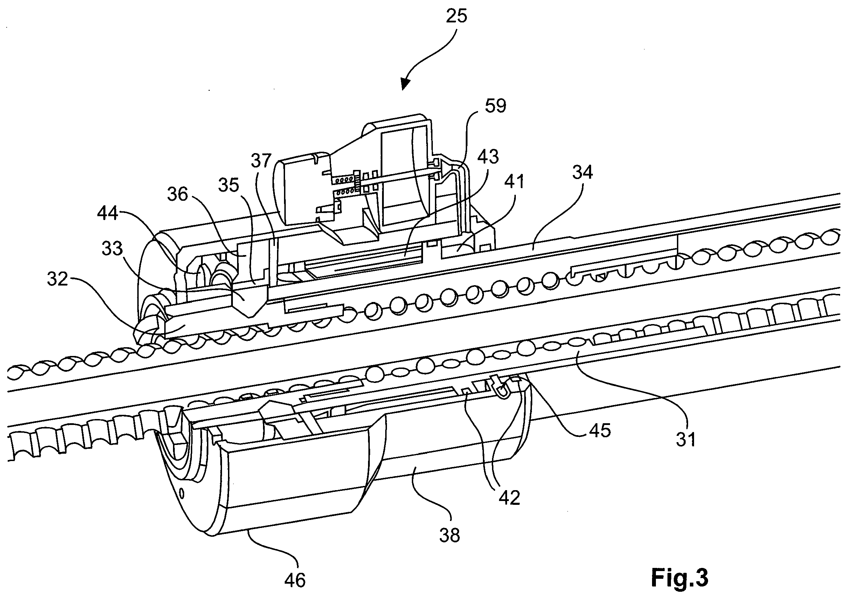

Weiter Bezug nehmend auf Figur 3 wird ein Entkoppelungsmechanismus eines Aktuatorelementes angezeigt.

Figur 3 zeigt dabei einen Entkoppelungsmechanismus in seinem gekoppelten Zustand. Pins 33 übertragen die Kräfte zwischen dem mit einem der Anbindungspunkte verbundenen Ausgangskolben 34 und der Kugelgewindemutter 31, während eine Verriegelungshülse 36 beide in Position hält. Gleitlager 35 zwischen Verriegelungshülse 36 und Pins 33 stellt eine geringe Reibung bereit. Verriegelungshülse 36, zusammen mit der energieabsorbierenden Hülse 37 und der Zughülse 38 sind untereinander geeignet mit Verbindungsschrauben 44 konnektiert und bilden zusammen mit dem Gleitlager 35 die Hülsenanordnung. Im gekoppelten Zustand der Entkoppelungsvorrichtung 10 kann die Hülsenanordnung z.B. durch Verriegelungspins 45 gesichert sein. Zur Entkoppelung des Entkoppelungsmechanismus wird ein Überdruck generierendes Gas in Kammer 41 eingebracht, wodurch der Druck in Kammer 41 ansteigt. Letztendlich wird somit Druck in Kammer 41 abgegeben. Nach Überschreiten einer definierten Druckschwelle überwiegt die durch den Druck eingebrachte Kraft in Kammer 41 einem Widerstand der durch Verriegelungspins 45, Reibung an den Dichtungen 42 sowie Reibung zwischen Gleitlager 35 und Pins 33 bereitgestellt wird.

Nach Auslösung der Entkopplung bewegt sich die Hülsenanordnung nun, in Figur 3, nach rechts und gibt dabei Pins 33 frei, während die energieabsorbierende Hülse 37 im Anschlag 43 abgebremst werden. Die energieabsorbierende Hülse 37 und der Anschlag 43 mögen aus einem formbaren, weichen Material ausgebildet sein, so dass die beiden Elemente durch den Aufprall ineinander verkeilen. So mag insbesondere eine umgekehrte Bewegung der Hülsenanordnung vermieden werden. In einer anderen Ausgestaltung kann alternativ eine Scheibe und Wabenstruktur verwendet werden, wobei die Wabenstruktur zusammengestaucht wird, wenn die Entkopplung ausgelöst wird. Durch geeignete Ausgestaltung der Pins 33 werden diese aufgrund der nun fehlenden Abstützung durch die Verriegelungshülse 36 in radialer Richtung nach außen gedrückt, so dass die Kraftübertragung zwischen den Antriebselementen der Antriebseinheit unterbrochen ist und der Aktuator frei läuft. Durch geeignete Ausgestaltung des Bereichs um die Pins 33 wird vermieden, dass diese wieder einrasten, während sie im Gehäuse 46 der Hülsenanordnung verbleiben.

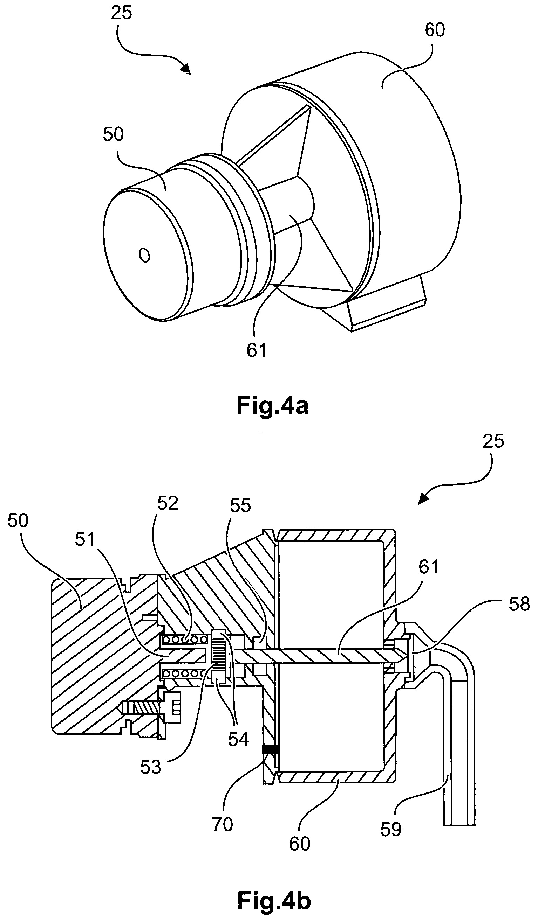

Weiter Bezug nehmend auf Figuren 4a,b wird eine exemplarische Ausgestaltung einer Entkoppelungsvorrichtung gemäß der vorliegenden Erfindung dargestellt.

Figuren 4a,b zeigen dabei eine mögliche Ausgestaltung einer Entkoppelungsvorrichtung, die verwendbar ist, um einen Entkoppelungsmechanismus, wie in den Figuren 3a,b dargestellt, zu betätigen. Die Entkoppelungsvorrichtung 25 weist ein Druckspeicherelement 60 auf, welches mittels eines Auslösemechanismus 61 derart ansteuerbar ist, so dass der im Druckspeicherelement 60 gespeicherte Druck abgebbar ist. Ein Auslösen von Auslösemechanismus 61 kann beispielsweise durch eine geeignete Vorrichtung bzw. Motorelement 50 erfolgen. Hierdurch lässt sich eine eigentlich pneumatisch aktivierte Entkoppelungsvorrichtung elektrisch auslösen.

Eine exemplarische Detaildarstellung der Entkoppelungsvorrichtung 25 zeigt Figur 4b. Im gekoppelten Zustand des Aktuatorelementes weist die pneumatische Entkoppelungsvorrichtung 25 einen im Druckspeicherelement 60 gespeicherten Überdruck auf, welcher einerseits unter Verwendung der Ableitung 59 abgebbar ist, jedoch durch Dichtelement 58 im Druckspeicherelement 60 gehalten wird. Unter Verwendung des Auslösemechanismus 61 kann das Dichtelement 58, beispielsweise ausgebildet als eine Berstscheibe, geeignet beeinflusst, zum Beispiel zerstört werden, so dass der im Druckspeicherelement 60 gespeicherte Druck über Ableitung 59 an ein weiteres Element, beispielsweise den Entkoppelungsmechanismus eines Aktuatorelementes, weitergebbar ist.

Zum Entkoppeln, somit zum Auslösen der pneumatischen Entkoppelungsvorrichtung 25 mag beispielsweise Motorelement 50 mit elektrischer Energie versorgt werden, so dass der Druckstempel 61 gelöst und unter Verwendung der Federkraft des zweiten Kraftelementes 52 in Richtung des Dichtelementes 58 bewegt wird. Durch die Drehung des Antriebswelle 51 durch das Motorelement 50 kann z.B. das erste Kraftelement 53 solange komprimiert werden, bis der Formschluss des Formschlusselementes 54 freigegeben, der Druckstempel 61 freigesetzt wird und das zweite Kraftelement 52 diesen in Richtung des Dichtelementes 58, der Berstscheibe, drücken kann. Hierdurch wird diese zerstört, so dass das komprimierte Gas im Inneren des Druckspeicherelementes 60 freigegeben und durch die Ableitung 59 an die Kammer eines Aktuatorelementes abgegeben wird. Wenn der Druck in der nachfolgenden Druckkammer des Entkoppelungsmechanismus eines Aktuatorelementes über einen Druckschwellwert ansteigt, wird der Entkoppelungsmechanismus, wie zuvor in Verbindung mit Figuren 3a,b beschrieben, ausgelöst.

Schematisch dargestellt in Figur 4b ist weiterhin eine Druckbestimmungsvorrichtung 70, angebracht an der Gehäusewandung zum Druckspeicherelement 60. Druckbestimmungsvorrichtung 70 kann dabei eine reine visuelle bzw. optische Signalisierung eines Druckes, insbesondere eines ausreichenden Druckes im Druckspeicherelement 60, oder eine mechanische Anzeige bereitstellen. Hierzu wird beispielsweise ein Element nach Eindrücken in Richtung des Inneren des Druckspeicherelementes 60 durch den Druck in Druckspeicherelement 60 wieder nach außen gedrückt. Weiterhin kann Druckbestimmungsvorrichtung 70 als elektronische Druckbestimmungsvorrichtung, insbesondere als ein Drucksensor ausgebildet sein, der geeignet an weitere Auswerteelektronik angeschlossen ist. Ein Test des Auslösemechanismus bzw. dessen Ansteuerung kann durch geeignete Messung eines Teststromes durch den Auslösemechanismus erfolgen, wobei dieser Teststrom unterhalb des minimal erforderlichen Stromes zur Komprimierung des ersten Kraftelementes 54 liegen mag.

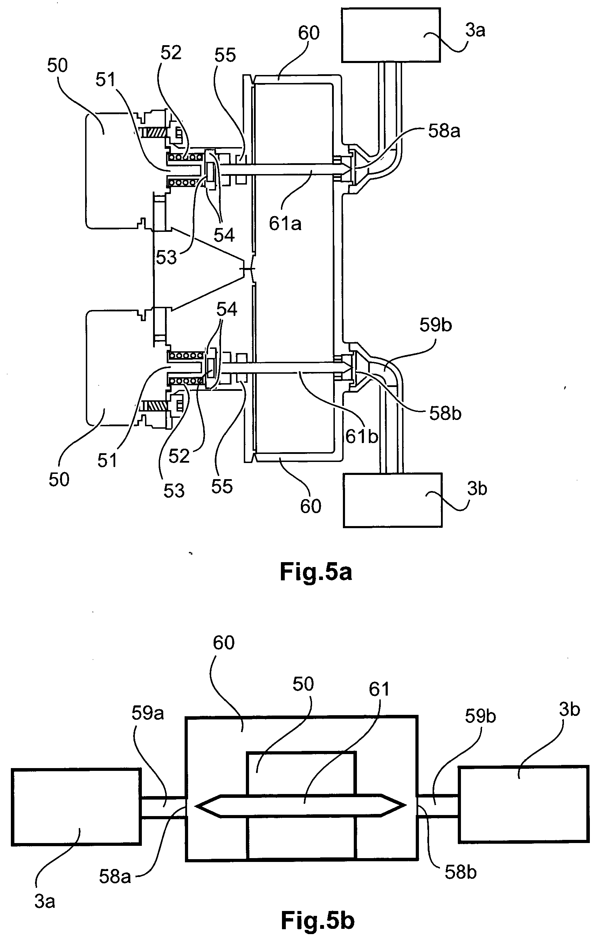

Weiter Bezug nehmend auf Figuren 5a,b werden weitere exemplarische Ausgestaltungen von Entkoppelungsvorrichtungen gemäß der vorliegenden Erfindung dargestellt.

Die Entkoppelungsvorrichtung 25 gemäß Figur 5a entspricht im Wesentlichen einer symmetrisch bzw. doppelt aufgebauten Entkoppelungsvorrichtung gemäß Figuren 4a,b.

Die Entkoppelungsvorrichtung 25 weist doppelt ausgebildete Auslösemechanismen 61 a,b auf, welche jedoch in einem gemeinsamen Druckspeicherelement 60 angeordnet sind. Jeder der Auslösemechanismen 61a,b weist ein Dichtelement 58a,b auf, mittels welchem er an eine Ableitung 59a,b angebunden ist. Jede der Ableitungen 59a,b führt zu einem Aktuatorelement 3a,b bzw. zu dessen Entkoppelungsmechanismus. Jede der beiden Auslösemechanismen 61a,b kann nun geeignet von einem zugehörigen Motorelement 50 ausgelöst werden, so dass der Druck im Druckspeicherelement 60 unter Verwendung einer der Ableitungen 59a,b an ein Aktuatorelement 3a,b abgebbar ist. Der Druck im Druckspeicherelement 60 kann dabei derart eingerichtet sein, so dass der Druck ausschließlich zum Auslösen eines einzigen Entkoppelungsmechanismus eines der Aktuatorelemente 3a,b ausreicht. Alternativ kann der Entkoppelungsmechanismus in den Aktuatorelementen 3a,b so aufgebaut sein, dass nach Durchführung der Entkoppelung ein weitgehender oder vollständiger Druckabbau im Druckspeicherelement 60 erfolgt. Wird z.B. Auslösemechanismus 61a betätigt, wird der Entkoppelungsmechanismus des Aktuatorelementes 3a ausgelöst. Ein möglicherweise noch verbleibender Restdruck im Druckspeicherelement 60 mag dann jedoch nicht mehr ausreichen, um im Falle, dass Auslösemechanismus 61 b Dichtelement 58b zerstört, nachfolgend noch den Entkoppelungsmechanismus von Aktuatorelement 3b auszulösen. Eine Anordnung einer Entkoppelungsvorrichtung gemäß Figur 5a kann beispielsweise in einer Ausgestaltung einer Aktuatoranordnung 24 gemäß Figur 2a verwendet werden.

Figur 5b zeigt eine andere Ausgestaltung einer Entkoppelungsvorrichtung.

Gemäß Figur 5b sind dabei Auslösemechanismus 61 sowie dessen Antrieb durch Motorelement 50 derart ausgebildet, so dass ausschließlich eines der beiden Dichtelemente 58a,b aufgebrochen werden kann. Auslösemechanismus 61 kann dabei von Motorelement 50 entweder, gemäß in Figur 5b, nach links bewegt werden, um Dichtelement 58a zu beschädigen und den Druck im Druckspeicherelement 60 unter Verwendung der Ableitung 59a an Aktuatorelement 3a abzugeben, oder aber Motorelement 50 kann Auslösemechanismus 61 in die gegenüber liegende Richtung, in Figur 5b nach rechts, bewegen, wodurch Dichtelement 59b zerstört wird und der Druck im Druckspeicherelement 60 unter Verwendung der Ableitung 59b an Aktuatorelement 3b abgegeben wird. Da ein einzelnes Element, der Auslösemechanismus 61, von Motorelement 50 ausschließlich entweder nach links oder nach rechts bewegt werden kann, können die Entkoppelungsmechanismen von Aktuatorelement 3a und 3b nicht gleichzeitig auslösen bzw. entkoppeln. Bei einer Ausgestaltung einer pneumatischen Entkoppelungsvorrichtung 25 gemäß Figur 5b ist somit aufgrund der Bauweise sichergestellt, dass ausschließlich ein Aktuatorelement 3a,b entkoppelt werden mag. Zusammengenommen mit einem Druck im Druckspeicherelement 60, welcher nur zum Auslösen eines einzigen Aktuatorelementes ausreicht, kann sichergestellt werden, dass nach ausgelöstem bzw. entkoppeltem erstem Aktuatorelement das weitere Aktuatorelement nicht mehr entkoppelt werden mag.

### Bezugszeichenliste

- 1: Motorelement
- 2a,b: Kraftübertragung
- 3: Aktuatorelement
- 5a,b: Anbindungspunkte
- 8,8a,b: Antriebseinheit, erstes, zweites Antriebselement
- 10: Entkoppelungsmechanismus
- 20a,b: aerodynamisch wirksame Fläche
- 22: Luftfahrzeugstruktur
- 24: Aktuatoranordnung
- 25: Entkoppelungsvorrichtung
- 31: Kugelgewindemutter
- 32: Adapter
- 33: Pins
- 34: Ausgangskolben
- 35: Gleitlager
- 36: Verriegelungshülse
- 37: Energie absorbierende Hülse
- 38: Zughülse
- 41: Kammer
- 42: Dichtungen
- 43: Endanschlag
- 44: Befestigungsmittel
- 45: Verriegelungspins
- 46: Gehäuse
- 50: Motorelement
- 51: Antriebswelle
- 52: zweites Kraftelement
- 53: erstes Kraftelement
- 54: Formschlusselement
- 55: Dichtung
- 58: Dichtelement/Berstscheibe
- 59: Ableitung
- 60: Druckspeicherelement
- 61: Auslösemechanismus/Druckstempel
- 70: Druckbestimmungsvorrichtung

## Patentansprüche

1. Pneumatische Entkoppelungsvorrichtung (25) zur Entkopplung zweier gekoppelter kraftparalleler Antriebselemente (8a,8b) eines elektromechanischen Aktuatorelements (3) für eine aerodynamische Steuerfläche, **dadurch gekennzeichnet, dass** die Entkoppelungsvorrichtung (25)
zumindest ein Druckspeicherelement (60) mit zumindest einer Abteilung (59) aufweist; und
zumindest einen Auslösemechanismus (61), der dazu eingerichtet ist, den im Druckspeicherelement (60) gespeicherten Druck gesteuert freizugeben;
wobei die Ableitung (59) des Druckspeicherelementes (61) an ein elektromechanisches Aktuatorelement (3) ankoppelbar ist; und
wobei durch Auslösen des Auslösemechanismus (61) der im Druckspeicherelement (60) gespeicherte Druck an das elektromechanische Aktuatorelement (3) abgebbar ist, zum Auslösen einer Entkoppelungsfunktion im elektromechanischen Aktuatorelement (3).

2. Entkoppelungsvorrichtung gemäß Anspruch 1, weiterhin aufweisend
eine Druckbestimmungsvorrichtung (70) zum Bestimmen des Druckes im Druckspeicherelement (60).

3. Entkoppelungsvorrichtung gemäß Anspruch 2,
wobei die Druckbestimmungsvorrichtung (70) ausgebildet ist als eine Vorrichtung aus der Gruppe bestehend aus visueller Druckbestimmungsvorrichtung, mechanischer Druckbestimmungsvorrichtung, elektronischer Druckbestimmungsvorrichtung und/oder im Druckspeicherelement angeordneter Drucksensor.

4. Entkoppelungsvorrichtung gemäß einem der vorhergehenden Ansprüche,
wobei das Druckspeicherelement (60) zumindest zwei Ableitungen (59a,b) aufweist;
wobei an jeder der zumindest zwei Ableitungen (59a,b) ein elektromechanisches Aktuatorelement (3) anschließbar ist; und
wobei der Auslösemechanismus (61) ausgebildet ist, den gespeicherten Druck unter Verwendung einer der zumindest zwei Ableitungen (59a,b) an ein elektromechanisches Aktuatorelement (3a,b) abzugeben;
wobei nach Abgabe des gespeicherten Druckes an ein elektromechanisches Aktuatorelement (3a,b) die Entkoppelungsfunktion des zweiten elektromechanischen Aktuatorelementes (3b,a) durch die Entkoppelungsvorrichtung (25) nicht mehr auslösbar ist.

5. Entkoppelungsvorrichtung gemäß Anspruch 4,
wobei der Auslösemechanismus (61) ausgebildet ist als ein einzelner Auslösemechanismus (61), der eingerichtet ist, den Druck wahlweise mittels jeder der zumindest zwei Ableitungen (59a,b) freizugeben; oder
wobei der Auslösemechanismus (61) ausgebildet ist als ein mehrfacher Auslösemechanismus (61 a,b), wobei jeder der Ableitungen (59a,b) ein Auslösemechanismus (61a,b) des mehrfachen Auslösemechanismus (61a,b) zugeordnet ist.

6. Entkoppelungsvorrichtung gemäß einem der vorhergehenden Ansprüche, der Auslösemechanismus (61) aufweisend
ein Formschlusselement (54) mit einem ersten Kraftelement (53);
ein zweites Kraftelement (52); und
ein Antriebselement (50);
wobei das erste Kraftelement (53) eingerichtet ist einen Formschluss des Formschlusselementes (54) zu halten;
wobei das Antriebselement (50) eingerichtet ist, entgegen der Kraftwirkung des ersten Kraftelementes (53) den Formschluss zu lösen; und
wobei das zweite Kraftelement (52) eingerichtet ist bei gelöstem Formschluss den im Druckspeicherelement (60) gespeicherten Druck mittels der Ableitung (59) freizugeben.

7. Entkoppelungsvorrichtung gemäß Anspruch 6,
wobei die Kraftrichtung des ersten Kraftelementes (53) und des zweiten Kraftelementes (52) nicht parallel, insbesondere im Wesentlichen senkrecht zueinander, orientiert sind.

8. Entkoppelungsvorrichtung gemäß einem der vorhergehenden Ansprüche,
wobei der Druck im Druckspeicherelement (60) gehalten wird durch eine Dichtwirkung eines Dichtelementes (58) in der zumindest einen Ableitung (59); und
wobei der Auslösemechanismus (61) eingerichtet ist, die Dichtwirkung aufzuheben, insbesondere irreversibel aufzuheben.

9. Entkoppelungsvorrichtung gemäß Anspruch 8,
wobei das zweite Kraftelement (52) eingerichtet ist, eine Kraft auf das Dichtelement (58) auszuüben, so dass die Dichtwirkung aufgehoben wird, so dass der im Druckspeicherelement (60) gespeicherte Druck mittels der Ableitung (59) freigegeben wird.

10. Aktuatorelement (3), aufweisend
eine Antriebseinheit (8), aufweisend ein erstes Antriebselement (8a) und ein zweites Antriebselement (8b);
wobei das erste Antriebselement (8a) und das zweite Antriebselement (8b) derart funktional zusammenwirken um eine Längenveränderung des Aktuatorelementes (3) zu bewirken; und
wobei das Aktuatorelement (3) einen Entkoppelungsmechanismus (10) aufweist, welcher das Aktuatorelement (3) funktional entkoppelt, so dass die Längenveränderung des Aktuatorelementes (3) unabhängig von der Antriebseinheit (8) ermöglicht wird, insbesondere ohne funktionale Entkoppelung von erstem Antriebselement (8a) und zweitem Antriebselement (8b); und
eine Entkoppelungsvorrichtung (25) gemäß einem der vorhergehenden Ansprüche, funktional gekoppelt mit dem Entkoppelungsmechanismus (10) und eingerichtet den gespeicherten Druck an den Entkoppelungsmechanismus (10) bereitzustellen;
wobei der Entkoppelungsmechanismus (10) bei bereitgestelltem Druck das Aktuatorelement (3) funktional entkoppelt.

11. Aktuatorelement gemäß Anspruch 10,
wobei das Aktuatorelement (3) zwei Anbindungspunkte (5a,b) aufweist, deren Abstand durch die Längenänderung des Aktuatorelementes (3) einstellbar ist;
wobei eines der Antriebselemente (8a,b) im Wesentlichen wirkunmittelbar mit dem einem der Anbindungspunkte (5a,b) verbunden ist;
wobei der Entkoppelungsmechanismus (10) im Wesentlichen wirkunmittelbar mit dem weiteren der Anbindungspunkte (5b,a) verbunden ist;
wobei der Abstand der zwei Anbindungspunkte (5a,b) im gekoppelten Zustand des Entkoppelungsmechanismus (10) durch das Aktuatorelement (3) einstellbar ist; und
wobei der Abstand der zwei Anbindungspunkte (5a,b) im entkoppelten Zustand des Entkoppelungsmechanismus (10) durch eine Kraftbeaufschlagung der Anbindungspunkte (5a,b) von außen veränderbar ist.

12. Aktuatorelement gemäß Anspruch 10 oder 11,
wobei die Antriebseinheit (8) ausgebildet ist als ein Kugelgewindetrieb; und wobei das erste Antriebselement (8a) und das zweite Antriebselement (8b) ausgebildet sind als Antriebsspindel und Spindelmutter des Kugelgewindetriebs.

13. Aktuatoranordnung (24), aufweisend
zumindest zwei Aktuatorelemente (3) gemäß einem der Ansprüche 10 bis 12, wobei die zumindest zwei Aktuatorelemente (3) kraftparallel angeordnet sind, so dass eine Längenveränderung der Aktuatoranordnung (24) von einem Aktuatorelement (3) allein oder von beiden Aktuatorelementen (3) parallel bewirkbar ist; und
wobei eine Entkoppelungsvorrichtung (25) gemäß zumindest Anspruch 4 oder 5 an die Aktuatorelemente angebunden ist.

14. Aktuatoranordnung gemäß Anspruch 13,
wobei die Entkoppelungsvorrichtung (25) im Falle eines Defektes einer Antriebseinheit (8) eines Aktuatorelementes (3) den Entkoppelungsmechanismus (10) dieses Aktuatorelementes (3) auslöst, so dass das Aktuatorelement (3) funktional entkoppelt wird;
wobei durch die Entkoppelung die Längenveränderung der Aktuatoranordnung (24) weiterhin vom nicht entkoppelten Aktuatorelement (3) bewirkbar ist.

15. Luftfahrzeug, insbesondere Flugzeug oder Helikopter, aufweisend eine Aktuatoranordnung (24) gemäß einem der Ansprüche 13 oder 14 und/oder ein Aktuatorelement (3) gemäß einem der Ansprüche 10 bis 12, zum Antrieb eines aerodynamisch wirksamen Elementes (20a,b).

## Claims

1. A pneumatic decoupling device (25) for decoupling two force-parallel coupled drive elements (8a, 8b) of an electromechanical actuator element (3) for an aerodynamic control surface, **characterized in that** the decoupling device (25) comprises at least one pressure accumulator element (60) with at least one outlet (59); and at least one tripping mechanism (61), configured to release pressure stored in the pressure accumulator element (60) in a controlled manner; wherein the outlet (59) of the pressure accumulator element (61) is coupleable to the electromechanical actuator element (3); and wherein by tripping the tripping mechanism (61) the pressure stored in the pressure accumulator element (60) is releasable to the electromechanical actuator element (3) to trigger a decoupling function in the electromechanical actuator element (3).

2. Decoupling device (25) according to claim 1, further comprising a pressure determining device (70) for determining the pressure in the pressure accumulator element (60).

3. Decoupling device (25) according to claim 2, wherein the pressure determining device (70) is configured as a device from the group consisting of a visual pressure determining device, a mechanical pressure determining device, an electronic pressure determining device and/or a pressure sensor disposed in the pressure accumulator element.

4. Decoupling device (25) according to one of the preceding claims, wherein the pressure accumulator element (60) comprises at least two outlets (59a,b); wherein a electromechanical actuator element (3) is coupleable to each of the at least two outlets (59a,b); and the tripping mechanism (61) is configured to release the stored pressure to an electromechanical actuator element (3a,b) by using one of the at least two outlets (59a,b); wherein after releasing the stored pressure to an electromechanical actuator element (3b,a), the decoupling function of the second electromechanical actuator element (3a,b) can no longer be triggered by the pneumatic decoupling device (25).

5. Decoupling device of claim 4, wherein the tripping mechanism (61) is configured as a single tripping mechanism configured to selectively release the pressure by each of the at least two outlets (59a,b); or wherein the tripping mechanism (61) is configured as a multiple tripping mechanism (61a,b), wherein each of the outlets (59a,b) is assigned a tripping mechanism (61a,b) of the multiple tripping mechanism (61a,b).

6. Decoupling device according to one of the preceding claims, the tripping mechanism (61) comprises a positive locking element (54) with a first force element (53); a second force element (52); and a drive element (50); wherein the first force element (53) is configured to hold a positive engagement of the positive locking element (54); wherein the drive element (50) is configured to release the positive engagement against the action of the force of the first force element (53); and when the positive engagement is released, the second force element (52) is configured to release the pressure stored in the pressure accumulator element (60) via the outlet (59).

7. Decoupling device according to claim 6, wherein the direction of force of the first force element (53) and of the second force element (52) are not arranged in parallel, in particular are arranged to be at least substantially perpendicular to one another.

8. Decoupling device according to one of the preceding claims, wherein the pressure in the pressure accumulator element (60) is held by a sealing effect of a sealing element (58) in the at least one outlet (59), and wherein the tripping mechanism (61) is configured to cancel, in particular irreversibly cancel the sealing effect.

9. Decoupling device according to claim 8, wherein the second force element (52) is configured to exert a force on the sealing element (58) to cancel the sealing effect so that the pressure stored in the pressure accumulator element (60) is released via the outlet (59).

10. An actuator element (3), comprising a drive unit (8) comprising a first drive element (8a) and a second drive element (8b), wherein the first drive element 8a) and the second drive element (8b) are configured to interact operationally in order to effect a variation in the length of the actuator element (3); and wherein the actuator element (3) comprises a decoupling mechanism (10), which operationally decouples the actuator element (3) so that the length of the actuator element can vary independently of the drive unit (8) and in particular without operationally decoupling the first drive element (8a) and the second drive element (8b); and a decoupling device (25) according to one of the preceding claims being operationally coupled to the decoupling mechanism (10) and configured to provide stored pressure to the decoupling mechanism (10); wherein the decoupling mechanism (10) is configured so that when the pressure is provided to operationally decouple the actuator element (3).

11. Actuator element according to claim 10, wherein the actuator element (3) has two attachment points (5a,b) having a distance that can be adjusted by changing the length of the actuator element (3); one of the drive elements (8a,b) is connected substantially in a operatively direct manner to one of the attachment points (5a,b); the decoupling mechanism (10) is connected substantially in a operatively direct manner to the other one of the attachment points (5a,b); wherein in the coupled state of the decoupling mechanism (10), the distance between the two attachment points (5a,b) is adjustable by the actuator element (3); and wherein in the decoupled state of the decoupling mechanism(10), the distance between the two attachment points (5a,b) is adjustable by applying a force to the attachment points (5a,b) from outside.

12. Actuator element according to claim 10 or 11, wherein the drive unit (8) is a ball screw drive; and wherein the first drive element (8a) and the second drive element (8b) are configured as a drive spindle and a spindle nut of the ball screw drive.

13. Actuator assembly (24), comprising at least two actuator elements (3) according to one of the claims 10 to 12, wherein the at least two actuator elements (3) are arranged in a force parallel manner, so that a variation in the length of the actuator assembly (24) can be effected by one actuator element (3) alone or by both actuator elements (3) in parallel; and wherein a decoupling device (25) according to claim 4 or 5 is attached to actuator elements.

14. Actuator assembly according to claim 13, wherein in the case of a defect of a drive unit (8) of an actuator element (3), the decoupling device (25) trips the decoupling mechanism (10) of this actuator element (3), so that the actuator element (3) is operationally decoupled; wherein due to the decoupling, the variation in the length of the actuator assembly (24) can still be effected by the non-decoupled actuator element (3).

15. Air vehicle, in particular aircraft or helicopter, comprising an actuator element (24) according to one of the claims 13 or 14 and/or an actuator element (3) according to one of the claims 10 to 12, for driving an aerodynamic effective element (20a,b).

## Revendications

1. Dispositif de découplage pneumatique (25) destiné à découpler deux éléments d'entraînement (8a, 8b) d'un élément d'actionneur électromécanique (3), couplés parallèlement en force, pour une surface de commande aérodynamique,
**caractérisé en ce que** le dispositif de découplage (25) présente au moins un élément accumulateur de pression (60) avec au moins une dérivation (59) ;
et
au moins un mécanisme de déclenchement (61), qui est agencé pour libérer de manière commandée la pression accumulée dans l'élément accumulateur de pression (60) ;
dans lequel la dérivation (59) de l'élément accumulateur de pression (**61**) peut être accouplée à un élément d'actionneur électromécanique (3) ; et
dans lequel le déclenchement du mécanisme de déclenchement (61) permet de transmettre à l'élément d'actionneur électromécanique (3) la pression accumulée dans l'élément accumulateur de pression (60) pour déclencher une fonction de découplage dans l'élément d'actionneur électromécanique (3).

2. Dispositif de découplage selon la revendication 1, présentant en outre : un moyen de détermination de la pression (70) destiné à déterminer la pression dans l'élément accumulateur de pression (60).

3. Dispositif de découplage selon la revendication 2,
dans lequel le moyen de détermination de la pression (70) est configuré sous la forme d'un dispositif choisi dans le groupe composé d'un dispositif de détermination visuelle de la pression, d'un dispositif de détermination mécanique de la pression, d'un dispositif de détermination électronique de la pression et/ou d'un capteur de pression disposé dans l'élément accumulateur de pression.

4. Dispositif de découplage selon une des revendications précédentes,
dans lequel l'élément accumulateur de pression (60) présente au moins deux dérivations (59a, b) ;
dans lequel un élément d'actionneur électromécanique (3) peut être raccordé à chacune des au moins deux dérivations (59a, b) ; et
dans lequel le mécanisme de déclenchement (61) est configuré pour transmettre la pression accumulée à un élément d'actionneur électromécanique (3a, b) en utilisant une des au moins deux dérivations (59a, b) ;
dans lequel, après la transmission de la pression accumulée à un élément d'actionneur électromécanique (3a, b), la fonction de découplage du second élément d'actionneur électromécanique (3b,a) ne peut plus être déclenchée par le dispositif de découplage (25).

5. Dispositif de découplage selon la revendication 4,
dans lequel le mécanisme de déclenchement (61) est configuré sous la forme d'un seul mécanisme de déclenchement (61), qui est agencé pour libérer la pression sélectivement au moyen de chacune des au moins deux dérivations (59a, b) ; ou
dans lequel le mécanisme de déclenchement (61) est configuré sous la forme d'un mécanisme de déclenchement multiple (61a, b), à chacune des dérivations (59a, b) étant associé un mécanisme de déclenchement (61a, b) du mécanisme de déclenchement multiple (61a, b).

6. Dispositif de découplage selon une des revendications précédentes, le mécanisme de déclenchement (61) présentant :
un élément de complémentarité de forme (54) comportant un premier élément de force (53) ;
un second élément de force (52) ; et
un élément d'entraînement (50) ;
dans lequel le premier élément de force (53) est agencé pour maintenir la complémentarité de forme de l'élément de complémentarité de forme (54) ;
dans lequel l'élément d'entraînement (50) est agencé pour défaire la complémentarité de forme contre l'effet de la force du premier élément de force (53) ; et
dans lequel le second élément de force (52) est agencé pour libérer au moyen de la dérivation (59) la pression accumulée dans l'élément accumulateur de pression (60) lorsque la complémentarité de forme est défaite.

7. Dispositif de découplage selon la revendication 6,
dans lequel les directions des forces du premier élément de force (53) et du second élément de force (52) ne sont pas orientées parallèlement, sont en particulier sensiblement perpendiculaires l'une à l'autre.

8. Dispositif de découplage selon une des revendications précédentes, dans lequel la pression est maintenue dans l'élément accumulateur de pression (60) par l'action d'étanchéité d'un élément d'étanchéité (58) dans au moins une dérivation (59) ; et dans lequel le mécanisme de déclenchement (61) est agencé pour annuler l'action d'étanchéité, en particulier pour l'annuler de manière irréversible.

9. Dispositif de découplage selon la revendication 8,
dans lequel le second élément de force (52) est agencé pour exercer une force sur l'élément d'étanchéité (58) de manière à annuler l'action d'étanchéité de telle sorte que la pression accumulée dans l'élément accumulateur de pression (60) est libérée au moyen de la dérivation (59).

10. Élément d'actionneur (3), présentant :
une unité d'entraînement (8), qui présente un premier élément d'entraînement (8a) et
un second élément d'entraînement (8b) ;
dans lequel le premier élément d'entraînement (8a) et le second élément d'entraînement (8b) coopèrent fonctionnellement de manière à provoquer une modification de la longueur de l'élément d'actionneur (3) ; et
dans lequel l'élément d'actionneur (3) présente un mécanisme de découplage (10) qui découple fonctionnellement l'élément d'actionneur (3) de telle sorte que la modification de la longueur de l'élément d'actionneur (3) est rendue possible indépendamment de l'unité d'entraînement (8), en particulier sans découplage fonctionnel par le premier élément d'entraînement (8a) et le second élément d'entraînement (8b) ; et
un dispositif de découplage (25) selon une des revendications précédentes, couplé fonctionnellement avec le mécanisme de découplage (10) et agencé pour fournir la pression accumulée au mécanisme de découplage (10) ;
dans lequel le mécanisme de découplage (10) découple fonctionnellement l'élément d'actionneur (3) lorsque la pression est fournie.

11. Élément d'actionneur selon la revendication 10,
dans lequel l'élément d'actionneur (3) présente deux points d'attache (5a, b), dont la distance peut être réglée par la modification de la longueur de l'élément d'actionneur (3) ;
dans lequel un des éléments d'entraînement (8a, b) est relié à l'un des points d'attache (5a, b) sensiblement directement de manière fonctionnelle ;
dans lequel le mécanisme de découplage (10) est relié à l'autre des points d'attache (5b,a) sensiblement directement de manière fonctionnelle ;
dans lequel la distance des deux points d'attache (5a, b) dans l'état couplé du mécanisme de découplage (10) peut être réglée par l'élément d'actionneur (3) ; et dans lequel la distance des deux points d'attache (5a, b) dans l'état découplé du mécanisme de découplage (10) peut être modifiée de l'extérieur par une application de force des points d'attache (5 a, b).

12. Élément d'actionneur selon la revendication 10 ou 11,
dans lequel l'unité d'entraînement(8) est configurée sous la forme d'une vis d'entraînement à billes ; et
dans lequel le premier élément d'entraînement (8a) et le second élément d'entraînement (8b) sont configurés sous la forme d'une vis d'entraînement et d'un écrou de vis de la vis d'entraînement à billes.

13. Agencement d'actionneur (24), présentant :
au moins deux éléments d'actionneur (3) selon une des revendications 10 à 12,
dans lequel les au moins deux éléments d'actionneur (3) sont disposés parallèlement en force de manière à pouvoir provoquer parallèlement une modification de la longueur de l'agencement d'actionneur (24) d'un seul élément d'actionneur (3) ou des deux éléments d'actionneur (3) ; et
dans lequel un dispositif de découplage (25) selon au moins la revendication 4 ou 5 est attaché aux éléments d'actionneur.

14. Agencement d'actionneur selon la revendication 13,
dans lequel, dans le cas d'un défaut d'une unité d'entraînement (8) d'un élément d'actionneur (3), le dispositif de découplage (25) déclenche le mécanisme de découplage (10) de cet élément d'actionneur (3) de manière à découpler fonctionnellement l'élément d'actionneur (3) ;
dans lequel le découplage permet de provoquer la modification de la longueur de l'agencement d'actionneur (24) en outre de l'élément d'actionneur (3) non découplé.

15. Aéronef, en particulier avion ou hélicoptère, présentant un agencement d'actionneur (24) selon une des revendications 13 ou 14 et/ou un élément d'actionneur (3) selon une des revendications 10 à 12, pour l'entraînement d'un élément fonctionnant de manière aérodynamique (20a, b).
